# EUROPEAN PATENT APPLICATION

(11) **EP 4 815 610 A1**
(43) Date of publication of application: **30.09.2026**
(21) Application number: 24899203.4
(22) Date of filing: 24.06.2024
(51) Int. Cl.: H04W 74/0833, H04L 5/14, H04L 5/00

(54) **RANDOM ACCESS METHOD, COMMUNICATION APPARATUS AND STORAGE MEDIUM**

(30) Priority: 06.12.2023 CN 202311666773
(71) Applicant: ZTE CORPORATION, Shenzhen, Guangdong 518057 (CN)
(72) Inventor: ZHANG, Junfeng, Shenzhen, Guangdong 518057 (CN); LIU, Xing, Shenzhen, Guangdong 518057 (CN); GOU, Wei, Shenzhen, Guangdong 518057 (CN); HAN, Xianghui, Shenzhen, Guangdong 518057 (CN); WEI, Xingguang, Shenzhen, Guangdong 518057 (CN); SHI, Jing, Shenzhen, Guangdong 518057 (CN)
(74) Representative: Ziebig Hengelhaupt Intellectual Property Attorneys Patentanwaltskanzlei PartGmbB
(86) International application number: PCT/CN2024/100951
(87) International publication number: WO 2025/118552

(57) **Abstract**

The present disclosure relates to the field of communications. Provided are a random access method, a communication apparatus and a storage medium. The method comprises: sending a random access signal on a random access time-frequency resource, wherein the random access time-frequency resource comprises a plurality of symbols, and the plurality of symbols include full-duplex symbols and non-full-duplex symbols.

## Description

### CROSS REFERENCE

The present disclosure claims priority to Chinese patent application filed with the China Patent Office on December 6, 2023, with Application No. 202311666773.9 and entitled "Random Access Method, Communication Apparatus and Storage Medium". The entire contents of the Chinese patent application are incorporated herein by reference.

### TECHNICAL FIELD

The present disclosure relates to the field of communications, and in particular, to a random access method, a communication apparatus, and a storage medium.

### BACKGROUND

In a communication system, a full-duplex technology may enable a communication node to simultaneously perform a transmitting operation and a receiving operation on a same time-frequency resource. In order to implement full-duplex communication, the communication system needs to perform strict isolation between transmission and reception to prevent a signal transmitted by the communication system itself from interfering with a received signal. Such isolation may involve hardware switching, such as antenna switching, filter switching, etc. Therefore, upon switching a full-duplex operation mode, a new guard period (GP) may need to be introduced to ensure that no interference is caused by hardware delay during the switching process.

When a new blank GP is introduced to facilitate switching of the full-duplex operation mode, the GP essentially interrupts a transmission flow of an originally continuous signal. For example, the GP interrupts a transmission of a long-format physical random access channel (PRACH) signal used for improving coverage capability of a PRACH signal. Since a PRACH signal requires continuous time resources to ensure sufficient signal strength and coverage, the coverage capability of the PRACH signal may be reduced due to the fact that the GP interrupts the continuous transmission of the PRACH signal. Since a transmission of a PRACH signal determines whether a communication node (e.g., a user equipment (UE)) can normally access the communication system, it is crucial to ensure the transmission of the PRACH signal in a full-duplex mode.

### SUMMARY

Embodiments of the present disclosure provide a random access method, a communication apparatus, and a storage medium for ensuring transmission of a PRACH signal in a full-duplex mode.

In a first aspect, a random access method is provided. The method is applied to a first node, and includes: sending a random access signal on a random access time-frequency resource, where the random access time-frequency resource includes a plurality of symbols, and the plurality of symbols include a full-duplex symbol and a non-full-duplex symbol.

In a second aspect, a random access method is provided. The method is applied to a second node, and includes: detecting a random access signal on a random access time-frequency resource, where the random access time-frequency resource includes a plurality of symbols, and the plurality of symbols include a full-duplex symbol and a non-full-duplex symbol.

In a third aspect, a random access apparatus is provided. The apparatus is applied to a first node, and includes: a sending module, configured to send a random access signal on a random access time-frequency resource, where the random access time-frequency resource includes a plurality of symbols, and the plurality of symbols include a full-duplex symbol and a non-full-duplex symbol.

In a fourth aspect, a random access apparatus is provided. The apparatus is applied to a second node, and includes: a detection module, configured to detect a random access signal on a random access time-frequency resource, where the random access time-frequency resource includes a plurality of symbols, and the plurality of symbols include a full-duplex symbol and a non-full-duplex symbol.

In a fifth aspect, a communication apparatus is provided. The apparatus includes: a memory and a processor; where the memory is coupled to the processor; the memory is configured to store a computer program; the processor, upon executing the computer program, implements the random access method according to any one of the above embodiments.

In a sixth aspect, a computer-readable storage medium is provided. The computer-readable storage medium stores computer program instructions, and the computer program instructions, upon being executed by a processor, implement the random access method according to any one of the above embodiments.

In a seventh aspect, a computer program product is provided. The computer program product includes computer program instructions, and the computer program instructions, upon being executed by a processor, implement the random access method according to any one of the above embodiments.

### BRIEF DESCRIPTION OF THE DRAWINGS

In order to describe the technical solutions in the present disclosure more clearly, the drawings required in some embodiments of the present disclosure will be briefly introduced below. However, the drawings in the following description are merely drawings of some embodiments of the present disclosure. For a person of ordinary skill in the art, other drawings may also be obtained according to these drawings.
FIG. 1 is a schematic diagram of a communication system provided by some embodiments of the present disclosure.
FIG. 2 is a schematic diagram of a random access time-frequency resource provided by some embodiments of the present disclosure.
FIG. 3 is a schematic diagram of a full-duplex mode provided by some embodiments of the present disclosure.
FIG. 4 is a schematic diagram of a guard period provided by some embodiments of the present disclosure.
FIG. 5 is a flowchart of a random access method provided by some embodiments of the present disclosure.
FIG. 6 is a schematic diagram of a random access signal format provided by some embodiments of the present disclosure.
FIG. 7 is a schematic diagram of another random access signal format provided by some embodiments of the present disclosure.
FIG. 8 is a schematic diagram of another guard period provided by some embodiments of the present disclosure.
FIG. 9 is a flowchart of another random access method provided by some embodiments of the present disclosure.
FIG. 10 is a structural schematic diagram of a random access apparatus provided by some embodiments of the present disclosure.
FIG. 11 is a structural schematic diagram of another random access apparatus provided by some embodiments of the present disclosure.
FIG. 12 is a structural schematic diagram of a communication apparatus provided by some embodiments of the present disclosure.

### DETAILED DESCRIPTION

The technical solutions in the present disclosure will be described clearly and completely below with reference to the accompanying drawings in the present disclosure. However, the described embodiments are only a part of the embodiments of the present disclosure, not all of the embodiments. Based on the embodiments in the present disclosure, all other embodiments obtained by a person of ordinary skill in the art without making any creative effort belong to the protection scope of the present disclosure.

It should be noted that, in the present disclosure, wordings such as "exemplary" or "for example" are used to represent examples, illustrations or descriptions. Any embodiment or design solution described as "exemplary" or "for example" in the present disclosure should not be construed as being more preferable or more advantageous than other embodiments or design solutions. To be specific, the usage of wordings such as "exemplary" or "for example" is intended to present related concepts in a concrete manner.

Hereinafter, the terms "first" and "second" are used for description purposes only, and are not to be construed as indicating or implying relative importance, or implicitly indicating the number of indicated technical features. Thus, a feature defined with "first" or "second" may explicitly or implicitly include one or more of such features.

In the description of the present disclosure, unless otherwise specified, "/" means "or", for example, A/B may represent A or B. "And/or" herein is merely an association relationship describing associated objects, indicating that three relationships may exist, for example, A and/or B may represent three cases: A alone, A and B simultaneously, and B alone. Furthermore, "at least one" means one or more, and "multiple" means two or more.

The methods provided in the embodiments of the present disclosure may be applied to various communication systems. For example, the communication system may be a fifth generation (5G) communication system, a wireless-fidelity (Wi-Fi) system, a third generation partnership project (3GPP)-related communication system, a future evolved communication system (e.g., a sixth generation (6G) communication system, etc.), or a system integrating multiple systems, which is not limited in the embodiments of the present disclosure.

In the embodiments of the present disclosure, a network architecture of a mobile communication network (including but not limited to 3G, 4G, 5G and future mobile communication networks) may at least include a first communication node and a second communication node. It should be understood that, in the present example, in device-to-device communication using two communication nodes, the first communication node and the second communication node may be both network side devices (e.g., including but not limited to a base station) or terminal side devices (e.g., including but not limited to a terminal). The first communication node and the second communication node may be referred as a first node and a second node for short, respectively.

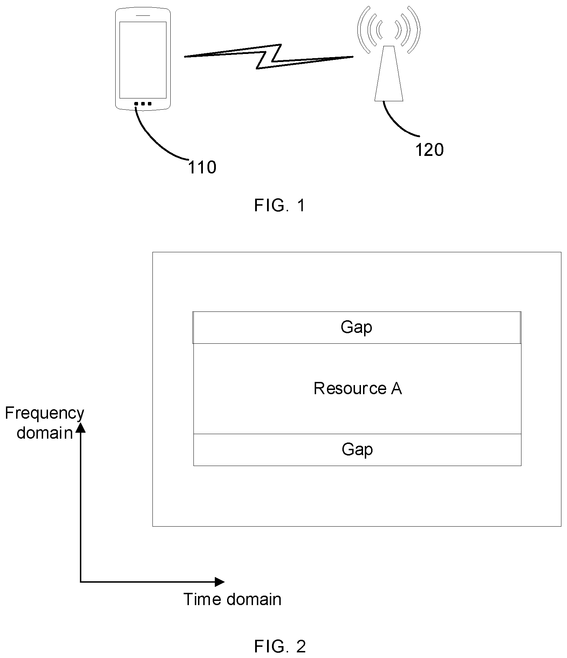

Exemplarily, taking the first node is a terminal and the second node is a base station as an example, as shown in FIG. 1, a communication system is provided in the embodiments of the present disclosure. The communication system includes a terminal 110 and a base station 120. There may be one or more terminals 110 and one or more base stations 120, and numbers of terminal(s) 110 and base station(s) 120 are not limited.

The first node, such as the terminal 110, is configured to send an uplink signal and receive a signal sent from the base station 120. For example, in a full-duplex scenario, the terminal 110 sends a PRACH signal to the base station 120 on a time-frequency resource, and receives a downlink signal sent from the base station 120 on a same time-frequency resource. Alternatively, the terminal 110 performs downlink (DL) transmission and uplink (UL) transmission by using a time division multiplexing method.

In some embodiments, the terminal may be a device with a full-duplex transmission capability. The terminal may be a mobile phone, a Pad, a computer with a wireless transceiving function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit application scenarios. A terminal may also be referred to as a user, a user equipment (UE), an access terminal, a UE unit, a UE station, a mobile station, a remote station, a remote terminal, a mobile device, a UE terminal, a wireless communication device, a UE agent, or a UE apparatus, etc., which is not limited in the embodiments of the present disclosure.

The base station 120 is configured to receive an uplink signal sent from the terminal 110, and send a downlink signal to the terminal 110. For example, in a full-duplex scenario, the base station 120 receives a PRACH signal sent from the terminal 110 on a time-frequency resource, and sends a downlink signal to the terminal 110 on a same time-frequency resource.

It should be noted that the PRACH signal is used to support establishing a connection between the terminal 110 and the base station 120 and performing uplink synchronization between the terminal 110 and the base station 120. Since a transmission of the PRACH signal determines whether the terminal 110 can normally access the communication system, it is crucial to ensure a success rate of the PRACH signal transmission.

Exemplarily, as shown in FIG. 2, in a carrier, the base station 120 configures, in frequency domain, an RB set based on continuous resource blocks (RBs) for a full-duplex operating mode (e.g., an in-band full duplex (IBFD) operating mode), in this way, some time-frequency resources for IBFD operation may be obtained, which are denoted as resource A. The resource A, also referred to as an IBFD subband, can be used for transmission of a downlink signal and reception of an uplink signal. At least at a base station 120 side, the resource A can be used for co-frequency co-time full-duplex transmission. That is, the base station 120 can simultaneously send a downlink signal and receive an uplink signal within the resource A by using a same time and a same frequency. Where a symbol/slot configured with the resource A is referred to as an IBFD symbol/slot, and a symbol/slot that is not configured with the resource A is referred to as a non-IBFD symbol/slot (e.g., a conventional downlink transmission symbol/slot, a conventional uplink transmission symbol/slot, or an F symbol/slot).

In some embodiments, the full-duplex operation mode further includes a subband full duplex (SBFD) mode. A symbol/slot configured with the resource A may also be referred to as an SBFD symbol/slot, and a symbol/slot that is not configured with the resource A is referred to as a non-SBFD symbol/slot (e.g., a conventional downlink transmission symbol/slot, a conventional uplink transmission symbol/slot, or an F symbol/slot).

In some embodiments, the base station may be a base station in long term evolution (LTE) or long term evolution advanced (LTEA), an evolutional Node B (eNB or eNodeB), a base station device in a 5G network, or a base station in a future communication system, etc. The base station may include various network side devices such as various macro base stations, micro base stations, home base stations, remote radio heads, reconfigurable intelligent surfaces (RISs), routers, relays, transmission receive points (TRPs), and wireless fidelity (WIFI) devices.

It should be noted that the above scenario is for illustrating the technical solutions of the embodiments of the present disclosure more clearly, and does not constitute a limitation on the technical solutions provided in the embodiments of the present disclosure. A person of ordinary skill in the art may understand that, with the evolution of system architectures and the emergence of new service scenarios, the technical solutions provided in the embodiments of the present disclosure are also applicable to similar technical problems.

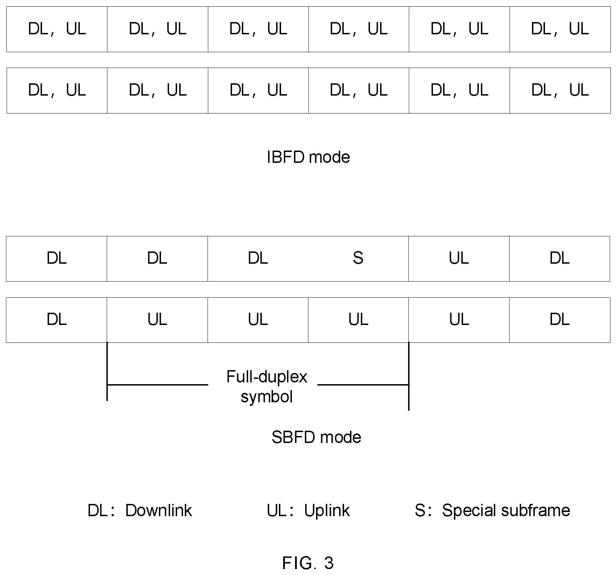

In a communication system, as shown in FIG. 3, full-duplex technology includes two modes: an SBFD mode and an IBFD mode. Full-duplex technology enables a communication node to perform transmission and reception operations simultaneously on a same time-frequency resource. Herein, the IBFD mode is a full-duplex communication mode in a complete sense. As shown in FIG. 3, in this mode, a same time-frequency resource where a communication node is located may be used for both uplink transmission and downlink transmission, and there is no need to distinguish between uplink transmission and downlink transmission. The SBFD mode is a full-duplex communication mode based on subbands, some specific subbands are partitioned out on a spectrum, and uplink-downlink configuration ratios between different subbands may also be different from each other. As shown in FIG. 3, in the SBFD mode, a downlink transmission of a first subband occupies more time-frequency resources, and an uplink transmission of a second subband occupies more time-frequency resources. In the present mode, transmission and reception may be performed simultaneously via different subbands, that is, a transmission signal and a reception signal may be transmitted simultaneously on a same spectrum resource.

Full-duplex technology sets an uplink subband and a downlink subband, which means that uplink-downlink configuration ratios between different subbands may have differences. Symbols on some subbands are used for downlink transmission, but same symbols on other subbands may be used for uplink transmission, and these symbols are defined as full-duplex symbols. Some subbands on full-duplex symbols may be used for uplink transmission by devices with full-duplex capability, but for devices without full-duplex capability, only an original uplink slot (i.e., a slot that may also be used by communication nodes that do not support full-duplex) can be used for transmission. Uplink transmission includes transmission of a PRACH signal, where the PRACH signal is used to establish a connection between a UE and a network side (e.g., a base station) and perform uplink synchronization between a UE and a network side, which determines whether the UE can normally access the communication system. In the full-duplex scenario, full-duplex symbols plus original uplink slots may extend a total time of uplink transmission, thereby increasing available PRACH resources or enhancing coverage of the PRACH signal.

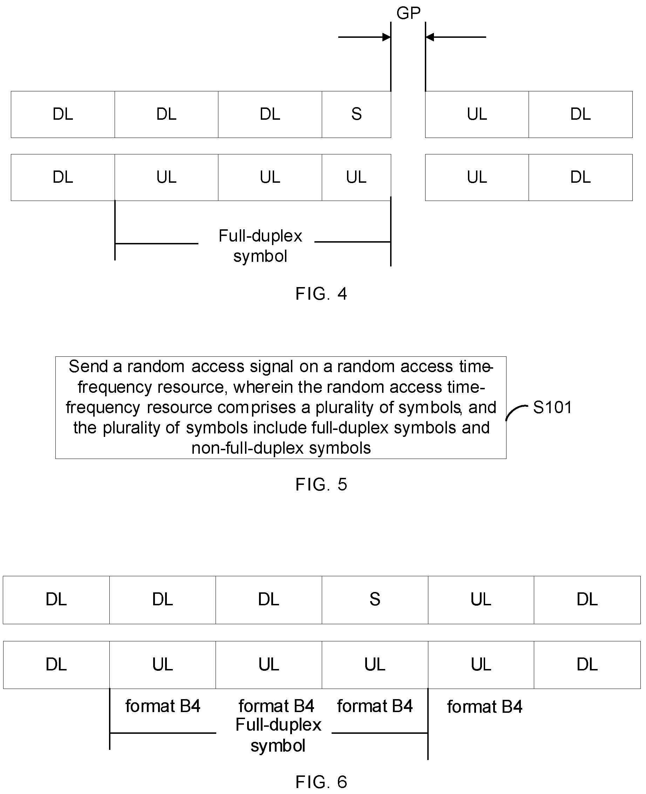

However, to achieve full-duplex communication, the communication system needs to perform strict isolation between transmission and reception to prevent a signal transmitted by the communication system itself from interfering with a received signal. Such isolation may involve hardware switching (e.g., antenna switching, filter switching, etc.) or switching between uplink and downlink. Therefore, as shown in FIG. 4, upon switching the full-duplex operating mode, a new GP may need to be introduced to ensure that interference is not caused due to delay during a switching process. When a new blank GP is introduced to facilitate switching of the full-duplex operation mode, the GP essentially interrupts a transmission flow of an originally continuous signal. For example, the GP interrupts the transmission of a PRACH signal that continuously uses full-duplex symbols and original uplink slots for long format transmission. Since the PRACH signal requires continuous time resources to ensure sufficient signal strength and coverage, the GP may cause a coverage capability of the PRACH signal to decrease. In addition, since the transmission of the PRACH signal determines whether the user equipment may access the communication system, in a full-duplex scenario, ensuring a transmission success rate of the PRACH signal is a task with a very high priority.

In view of the above problems, referring to FIG. 5, FIG. 5 is a flowchart of a random access method provided by the embodiments of the present disclosure. As shown in FIG. 5, the random access method provided by the embodiments of the present disclosure is applied to a first node, and at least includes S101.

In S101: a random access signal is sent on a random access time-frequency resource.

Herein, the random access time-frequency resource includes multiple symbols, and the multiple symbols include a full-duplex symbol and a non-full-duplex symbol.

Herein, the random access time-frequency resource includes multiple symbols, and the multiple symbols include a full-duplex symbol and a non-full-duplex symbol.

In some embodiments, the full-duplex technology includes two modes: an IBFD mode and an SBFD mode. Therefore, a full-duplex symbol may be an IBFD symbol or an SBFD symbol. A non-full-duplex symbol may be a non-IBFD symbol or a non-SBFD symbol.

In some embodiments, the second node may configure an RB set based on continuous RBs in frequency domain for a full-duplex scenario, thereby obtaining a random access time-frequency resource, which is denoted as resource B. The resource B can be used for uplink signal transmission and downlink signal transmission. That is, a first node may send a random access signal to a second node on the resource B, and at a same time, the second node may send a downlink signal to the first node on the resource B.

In some embodiments, the random access signal may be a PRACH signal. The PRACH signal is used to establish a connection between the first node and the second node and perform uplink synchronization between the first node and the second node, which determines whether the first node can normally access the communication system.

It can be understood that based on the random access method provided by the embodiments of the present disclosure, the full-duplex symbol may enable the first node to perform bidirectional communication on the same time-frequency resource, thereby improving a response speed of the first node transmitting a random access signal (e.g., a PRACH signal) on the random access time-frequency resource and a utilization efficiency of communication system resources. Non-full-duplex symbols may ensure a stability of transmitting a random access signal on a random access time-frequency resource in a case where a first node is at a relatively far distance or in a complex environment. In summary, the random access resource includes multiple symbols, and the multiple symbols include a full-duplex symbol and a non-full-duplex symbol, which may enable the first node to aggregate and use the full-duplex symbol and the non-full-duplex symbol according to actual conditions upon transmitting a random access signal (e.g., a PRACH signal) on the random access time-frequency resource, thereby minimizing a problem that a continuous transmission of the random access signal is interrupted due to the introduction of a new blank GP in the full-duplex operation mode, improving a coverage capability of the random access signal, and further ensuring the transmission of the random access signal in the full-duplex mode.

As a possible implementation, the above S101 may be specifically implemented as that: a random access signal of a same format is sent on the random access time-frequency resource.

In some embodiments, the format of the random access signal on the full-duplex symbol and the format of the random access signal on the non-full-duplex symbol may be same. For example, as shown in FIG. 6, format B4 may be configured for the PRACH signal on the full-duplex symbol and the non-full-duplex symbol.

It can be understood that transmitting a random access signal of the same format on the random access time-frequency resource may enable the first node not to need to support random access signals of multiple formats, thereby reducing a complexity of design and implementation of the first node. A random access signal with a unified format may enable the second node to plan and allocate random access time-frequency resources more effectively, thereby improving a utilization efficiency of resources. Furthermore, a unified signal format also helps the second node better identify and process a random access request of the first node, thereby improving an access success rate of the first node.

As another possible implementation, the above S101 may be specifically implemented as that: random access signals of multiple formats are sent on the random access time-frequency resource. Herein a random access signal of each format corresponds to at least one symbol in the random access time-frequency resource.

In some embodiments, the random access signals of multiple formats at least include a random access signal of a first format and a random access signal of a second format, where random access signals of different formats are applicable to symbols in different types of slots. For example, the random access signal of the first format is applicable to symbols in a first type of slot, the random access signal of the second format is applicable to symbols in a second type of slot, and an available length of the first type of slot is less than an available length of the second type of slot.

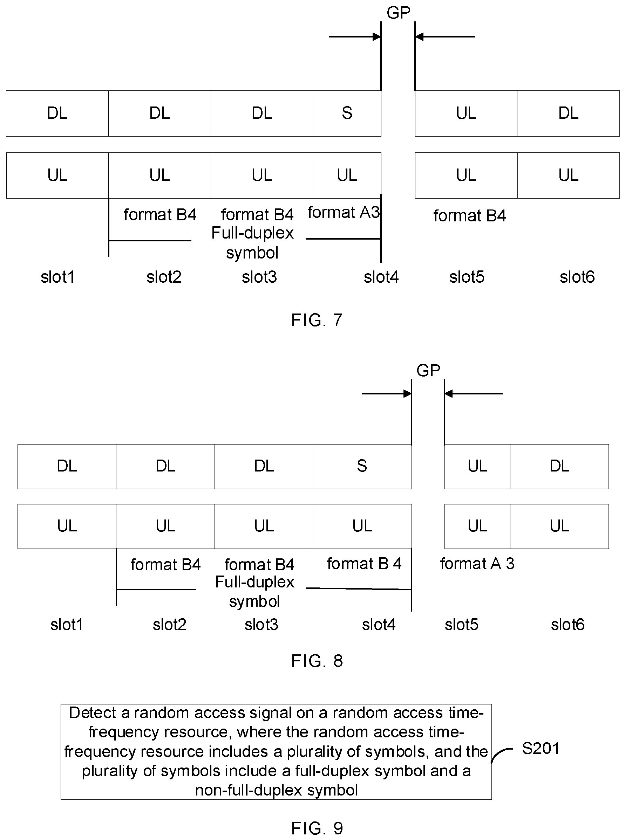

For example, in the full-duplex scenario, in a case where a blank GP needs to cut a part of an original effective slot on the random access time-frequency resource, a shorter slot after cutting is the first type of slot. In this case, the available length of the first type of slot is less than the available length of the second type of slot, and the first type of slot cannot support a same format as the second type of slot. Therefore, on the first type of slot, a random access signal of a first type may be selected to be applicable to the available length of the first type of slot. For example, as shown in FIG. 7, a total length of the full-duplex symbols is 2.5 slots, where a slot2, a slot3, and an original uplink slot5 may use a format B4, while a slot4, which has a remaining half length after being cut by the blank GP, may use a format A3 to match a slot length of the slot4.

As shown in FIG. 7, when a full-duplex symbol is configured or full-duplex is activated, a frame structure determines that available uplink slots are slot1, slot2, slot3, slot5, and slot6. Herein, slot4 is additionally truncated for a part of time due to being truncated by the blank GP, so the slot4 is defined as a truncated slot, an abnormal slot, a special slot, or a guard slot. Accordingly, the slot1, the slot2, the slot3, the slot5, and the slot6 are defined as normal slots. Herein, the slot1, the slot5, and the slot6 belong to the original uplink slots.

It can be understood that the method provided by the embodiments of the present disclosure, by transmitting random access signals of multiple formats on the random access time-frequency resource, may adapt to the available slot lengths of different slots on the random access time-frequency resource, so as to reduce an impact on the transmission of the random access signal after the blank GP truncates a certain slot. The first node may aggregate random access signals according to the random access signals of different formats, so as to ensure a duration and stability of random access signal transmission and improve the coverage capability of the random access signal.

In some embodiments, even if the formats of the random access signals on the random access time-frequency resource are different from each other, a difference in lengths of cyclic prefixes (CP) of the random access signals of multiple formats is within a preset range. That is, a CP length between different formats should be kept as small as possible. For example, the preset range may be that a difference in CP length between different formats is less than 10%.

For example, the random access time-frequency resource includes random access signals of two different formats: a format B4 and a format A3. A CP length of the format B4 is 936 samples, and a CP length of the format A3 is 864 samples. A difference between the CP length of the format B4 and the CP length of the format A3 is less than 10% of a cyclic prefix length, and the impact on the coverage capability of the random access signal is very small.

It can be understood that the CP may help reduce an inter-subcarrier interference and an inter-symbol interference. Keeping a small difference in the CP length of the random access signal may make it easier to perform resource partitioning and adjustment on the random access signal, thereby improving a utilization rate of random access resources. In addition, in a wireless communication system, signals are generally transmitted according to a specific frame structure. If the difference in CP length of random access signals of different formats is within a preset range, a uniformity of the frame structure of the communication system may be ensured, which is conducive to maintaining network synchronization.

In some embodiments, the above format may be an existing format or a new format.

As an example, since full-duplex symbols are numerous and may cross multiple slots, existing long format across slots may be used as much as possible, such as a format 2 defined in the communication system (the format is for a subcarrier bandwidth of 15 KHz in a slot) or a format 0, a format 1, a format 3, etc. (these formats are for a subcarrier bandwidth of 30 KHz in a slot).

As another example, a new format may be designed for a random access signal (e.g., a PRACH signal) transmitted across multiple slots. Exemplarily, in a case where the subcarrier bandwidth is 15 KHz, a total length of a full duplex symbol is approximately between 2.5ms and 3ms. In this case, no existing PRACH format may fit this length, so a new PRACH format may be considered to be designed. For example, a new PRACH format may contain 3 consecutive PRACH sequences (with a total length of 839 points).

The above FIG. 7 represents that the blank GP is extracted from a slot containing full duplex symbol. Considering that the blank GP may also be extracted from a first slot of an existing uplink slot, after a random access signal is segmented, a format of the random access signal in different slots may also change. Exemplarily, as shown in FIG. 8, since the blank GP is extracted from a first slot of existing uplink slots, the first slot of the existing uplink slots is truncated, and then the truncated slot can only support a shorter format of a random access signal, such as a format A3. However, a slot containing all full duplex symbols may support a longer format, such as a format B4.

It can be understood that the format of the random access signal used in the existing uplink slot often needs to consider a backward compatibility of the format, while the format of the random access signal in the slot containing full duplex symbol has higher flexibility. Therefore, regardless of whether the blank GP is extracted from the slot containing full duplex symbol or from the existing uplink slot, the format of the random access signal used in the slot containing full duplex symbol and the format of the random access signal in the slot containing non-full duplex symbol may be different from each other.

In some embodiments, in a case where the formats of the random access signals sent on the time-frequency resource for random access are different from each other, the above method further includes that: a first signaling is received.

Herein, the first signaling is used to indicate an index corresponding to each of the multiple formats, and a time domain position of a symbol used by each of the multiple formats.

Exemplarily, taking a case where the random access signal is a PRACH signal as an example, a format of the PRACH signal is generally indirectly configured; that is, the PRACH format is indirectly obtained by the second node specifying a PRACH configuration index in a PRACH time domain resource table. After receiving the first signaling, a first node determines the format of the PRACH signal from the PRACH time domain resource table based on an index corresponding to each of the multiple formats indicated by the first signaling, and determines the format of the PRACH signal on each symbol based on the time domain position of the symbol used by each of the multiple formats.

Herein, the PRACH time domain resource table is shown in Table 1 below. Based on the PRACH time domain resource table, the format of a PRACH signal may be determined according to the index corresponding to each format.

**Table 1**

| Configuration index | Preamble format | *n*_{SFN} mod *x* = *y* | | Subframe number | Starting symbol | Number of slots in a subframe | Number of time domain occasio ns in a slot | Time durati on |
|---|---|---|---|---|---|---|---|---|
| | | x | y | | | | | |
| 0 | 0 | 16 | 1 | 1 | 0 | - | - | 0 |
| ... | | | | | | | | |
| 52 | 1 | 1 | 0 | 3,6,9 | 0 | - | - | 0 |
| 53 | 2 | 16 | 1 | 1 | 0 | - | - | 0 |
| ... | | | | | | | | |
| 86 | 3 | 1 | 0 | 0,1,2,3,4, 5,6,7,8,9 | 0 | - | - | 0 |
| 87 | A1 | 16 | 0 | 4,9 | 0 | 1 | 6 | 2 |
| ... | | | | | | | | |
| 108 | A1/B1 | 2 | 0 | 4,9 | 0 | 1 | 7 | 2 |
| ... | | | | | | | | |
| 117 | A2 | 16 | 1 | 2,6,9 | 0 | 1 | 3 | 4 |
| ... | | | | | | | | |
| 137 | A2/B2 | 2 | 1 | 2,6,9 | 0 | 1 | 3 | 4 |
| ... | | | | | | | | |
| 147 | A3 | 16 | 1 | 4,9 | 0 | 1 | 2 | 6 |
| ... | | | | | | | | |
| 165 | A3 | 1 | 0 | 0,1,2,3,4, 5,6,7,8,9 | 0 | 2 | 2 | 6 |
| ... | | | | | | | | |
| 167 | A3/B3 | 2 | 1 | 2,6,9 | 0 | 2 | 2 | 6 |
| ... | | | | | | | | |
| 177 | B1 | 16 | 0 | 4,9 | 0 | 1 | 7 | 2 |
| ... | | | | | | | | |
| 198 | B4 | 16 | 0 | 4,9 | 0 | 2 | 1 | 12 |
| ... | | | | | | | | |
| 217 | B4 | 1 | 0 | 0,1,2,3,4, 5,6,7,8,9 | 0 | 2 | 1 | 12 |
| 219 | C0 | 8 | 1 | 4 | 0 | 2 | 7 | 2 |
| ... | | | | | | | | |
| 236 | C2 | 16 | 1 | 4,9 | 0 | 1 | 2 | 6 |
| ... | | | | | | | | |
| 255 | C2 | 1 | 0 | 1,3,5,7,9 | 0 | 2 | 2 | 6 |

In a case where a function of aggregating different PRACH formats is introduced for a first node, a configuration of a corresponding PRACH format may still consider using different indexes in the PRACH time domain resource table to jointly determine the PRACH format used in PRACH aggregation. For example, if the PRACH configuration indexes indicated by the first signaling are 165 and 217, then as shown in Table 1 above, corresponding PRACH formats are a A3 format and a B4 format, respectively. In addition to being used to indicate an index corresponding to each format, the first signaling is also used to indicate a time domain position of a symbol used by each format. For example, the first signaling indicates that an index 165 corresponds to a truncated slot, and an index 217 corresponds to a normal slot.

In some embodiments, the first signaling may also only configure an index corresponding to a normal slot, and directly specify a PRACH format for a truncated slot separately.

It should be noted that although the formats of PRACH aggregation are different from each other, a root sequence used and a sequence number used within the root sequence may still be same, which is not limited in the embodiments of the present disclosure.

It can be understood that, by receiving the first signaling, a first node may learn which formats of random access signals a second node (i.e., a network side) supports and the time domain position of the symbol used by each format, so that the first node sends the random access signal at a correct time, thereby avoiding conflicts with transmission of other signals and improving a success rate of the random access process. In addition, based on an indication of the first signaling, the first node sends the random access signal at a specific time domain position, which helps resource allocation and usage of the time-frequency resource for random access and avoids waste of resources.

It should be noted that, when configuring the format of a random access signal, for a same communication node, a same format is generally configured for the random access signal. For a communication node supporting full-duplex, since the communication node may support aggregating random access signals of different formats during random access signal transmission, when configuring a format of a corresponding random access signal, the second node may reconsider a signaling design, which is not limited in the embodiments of the present disclosure.

In some embodiments, the above method further includes that: a second signaling is received. Herein, the second signaling is used to indicate a position and a length of a guard time. After receiving the second signaling, the first node may determine, according to the position and length of the GP indicated by the second signaling, which symbols in a truncated slot may be used to send a random access signal.

It should be noted that an appearance of a blank GP causes an interruption of continuous uplink transmission. However, if the second node does not define and does not notify the first node of the position and length of an occurrence of the blank GP, the first node cannot determine which symbols in a truncated slot may be used to send the random access signal. In a case where a specific position and length of the GP are unknown, the truncated slot where the GP is located cannot be used to transmit a random access signal, and can be defined as an invalid random access occasion (RACH occasion, RO). If symbols in the truncated slot need to be used for the transmission of the random access signal, it is very important for the second node to configure the occurrence of the position and length of the GP.

It can be understood that, in the method provided in the embodiments of the present disclosure, after receiving the second signaling, the first node may determine, according to the position and length of the GP indicated by the second signaling, which symbols in the truncated slot may be used to send a random access signal, which may enable the first node to maximize a utilization of resources in the truncated slot and avoid resource waste. In addition, based on the position and length of the GP, the first node may select an optimal transmission timing upon sending a random access signal, so as to improve a transmission efficiency of the random access signal and improve a success rate of a random access request of the first node.

In some embodiments, the second node may also configure a length of the truncated slot, a position and a length of a DL symbol in the truncated slot, a position and a length of an uplink symbol, etc., to indirectly configure the position and length of the GP.

It can be understood that, in addition to directly configuring the position and length of the GP, the second node may also indirectly indicate the position and length of the GP to the first node in other manners, thereby improving a flexibility of the communication system.

In some embodiments, a timing advance of a random access signal transmitted on a full-duplex symbol is different from a timing advance of a random access signal transmitted on a non-full-duplex symbol. Random access signals that are segmented, aggregated and transmitted, due to that the random access signals are separated by a blank GP in a middle, a timing advance of each segment may be different from each other. Exemplarily, a random access signal transmitted on an original uplink slot may follow a conventional timing advance, for example, the timing advance may include a common numerology time alignment offset (NTAoffset). However, for a random access signal transmitted on a full-duplex symbol, a timing advance thereof may be different from that on the original uplink slot, for example, the timing advance thereof may be set to 0. If a blank GP is also reserved in a downlink slot before the first slot where the full-duplex symbol is located, the timing advance of the random access signal transmitted on the full-duplex symbol may also be greater than 0.

In some embodiments, a power configuration of a random access signal transmitted on a full-duplex symbol is different from a power configuration of a random access signal transmitted on a non-full-duplex symbol. The power configuration of the random access signal transmitted on the full-duplex symbol includes a power offset. When a first node respectively transmits a random access signal in a slot where the full-duplex symbol is located and in a slot where the non-full-duplex symbol is located and performs aggregation, based on a conventional power control of the random access signal, an independent power offset may be configured for the random access signal transmitted in the slot where the full-duplex symbol is located to resist large interference of downlink transmission to uplink transmission in a full-duplex mode. Exemplarily, the power offset may be greater than or equal to 0 dB, but in some scenarios, the power offset may also be configured to be less than 0 dB, which is not limited in the present disclosure.

It should be noted that the above disclosed embodiments mainly describe that the transmission of the random signal can only be performed in a segmented and aggregated manner due to the separation by the blank GP. However, in a case where a certain condition is satisfied, the random access signal may cross the blank GP, that is, the random access signal may be transmitted across the full-duplex symbol and the non-full-duplex symbol. For example, in a case where a phase continuity condition is satisfied, the random access signal may be transmitted across the blank GP.

It can be understood that, in the method provided in the embodiments of the present disclosure, a format of a conventional random access signal with backward compatibility is configured on the original uplink slot, in this way, regardless of whether the first node has a full-duplex capability, the first node may use the format to transmit the random access signal.

In some embodiments, a random access configuration table is used to indicate a time-frequency resource used by the first node to transmit the random access signal. In the random access configuration table, each RO corresponds to a specific time-frequency resource for the first node to use when transmitting the random access signal. The random access time-frequency resource includes a time-frequency resource corresponding to at least one RO in the random access configuration table.

In some embodiments, all ROs in the random access configuration table are valid ROs. Even an RO falling on a downlink symbol is considered as a valid RO, and a corresponding symbol is defined as a full-duplex symbol, in this case, a total resource occupied by the ROs multiplexed in frequency domain corresponds to a bandwidth of an uplink subband, and the first node may perform uplink transmission and downlink transmission on a same frequency domain resource.

It can be understood that, in a mobile communication system, a downlink signal power at a second node side (e.g., a base station) is generally strong, this is because the base station needs to cover a larger geographic area to ensure that a first node (e.g., a UE) can receive a stable signal. The base station has a relatively large transmit power and a more efficient antenna system, which enables the base station to transmit a high-power downlink signal to a wide area. In contrast, due to a limited transmit power of the UE, a power of an uplink signal (e.g., a PRACH signal) transmitted from the UE to the base station is generally weak. Since the downlink signal transmitted from the base station has a high intensity, if a reception frequency of the uplink signal by the base station is too close to a transmission frequency of the downlink signal, or there is an overlap in spatial distribution, interference of the downlink signal to the uplink reception may occur (e.g., in a full-duplex mode in a complete sense, adjacent band interference caused by downlink transmission in a downlink subband to uplink reception in an adjacent band). Such interference may cause a signal-to-noise ratio to deteriorate when the base station receives the uplink signal from a terminal, thereby affecting communication quality and reliability. The method provided in the embodiments of the present disclosure, by defining all ROs in the random access configuration table as valid ROs, may enable that there is no transmission of other downlink signals or channels on the random access time-frequency resource when the first node transmits the random access signal on the random access time-frequency resource.

It should be noted that, for the SBFD mode, although the second node still needs to solve a problem of overall transmission and reception, that is, solving a self-interference problem of self transmission and reception. However, from a perspective of the first node (e.g., a UE), there is no self-interference problem of its own transmission and reception. In addition, from a perspective of the second node, an overall transmission and reception mode is full-duplex, but specific to a certain subband and a certain symbol, the transmission of the signal is still non-full-duplex. The self-interference problem of the full-duplex solution in the SBFD mode mainly lies in adjacent band interference caused by downlink transmission in a downlink subband to uplink reception in an adjacent band, that is, the full-duplex solution based on the SBFD mode reduces a difficulty of solving the self-interference problem.

In some embodiments, a full-duplex symbol may also be defined first, and then all ROs falling within the full-duplex symbol are defined as valid ROs.

It can be understood that, in a full-duplex scenario, if on the random access time-frequency resource, the first node is used to transmit the random access signal, and on a same random access time-frequency resource, the second node also needs to transmit a downlink signal, and at an antenna port of the second node, a power of the downlink signal is strong, while a random access signal received in uplink is weak, and the downlink transmission causes strong interference to the uplink reception, an additional self-interference cancellation technique is needed to eliminate self-interference. The method provided in the embodiments of the present disclosure, by defining the full-duplex symbol first, in consideration of a frame structure, relatively important downlink signals may be excluded, and these important downlink signals are not defined as full-duplex symbols, thereby ensuring normal communication. In addition, by defining the full-duplex symbol and defining all ROs falling within the full-duplex symbol as valid ROs, ROs for transmitting the random access signal may be supplemented, thereby improving transmission efficiency and transmission quality of a random access signal with a higher priority, and avoiding large interference of downlink transmission to the random access signal in the full-duplex scenario.

In some embodiments, in a full-duplex scenario, a problem of insufficient TDD uplink random access resources and insufficient coverage caused by fewer TDD uplink slots originally limited under a time division duplexing (TDD) frame structure is solved. Full-duplex in a complete sense allows a UE to organize a random access signal at any starting point and time duration, thereby expanding a coverage and a total resource of random access. For example, originally only PRACH short formats of A, B, and C could be used, and now a PRACH long format with a length of 1 ms and up to 3.5 ms may be additionally considered. However, due to severe self-interference from downlink to uplink in the full-duplex mode and an actual requirement of preferentially guaranteeing PRACH reception, full-duplex in the complete sense is not very suitable for PRACH transmission, and a subband-based SBFD mode is more suitable for enhancing PRACH. This may be regarded as a degradation or simplification of the full-duplex function, where a dedicated time-frequency resource may be opened for PRACH, and there is no need for the base station to transmit a downlink signal or service on a same time-frequency resource upon receiving PRACH. Alternatively, in an IBFD scenario, even if some downlink signals or services can be transmitted upon receiving PRACH, important downlink signal SSB and important uplink signal PRACH should be prohibited from each other, and a predefined priority may be considered, or transmission of SSB or PRACH in a certain direction is directly forbidden.

In some embodiments, if a case of configuring a downlink subband in an uplink slot is considered, a number of SSBs is a main factor affecting TDD coverage. Then, a resource of a control resource set 0 (CORESET0) corresponding to all SBBs falling on the uplink slot may be defined as a downlink subband.

It should be noted that, other frequency domain resources except for the uplink subband and downlink subband defined above may be configured according to a conventional frame structure, or may be configured according to a frame structure suitable for full-duplex, which is not limited in the embodiments of the present disclosure.

Referring to FIG. 9, FIG. 9 is a flowchart of another random access method provided in the embodiments of the present disclosure. As shown in FIG. 9, the random access method provided in the embodiments of the present disclosure is applied to a second node, and may be implemented as S201.

In S201: a random access signal is detected on a random access time-frequency resource.

Herein, the random access time-frequency resource includes multiple symbols, and the multiple symbols include a full-duplex symbol and a non-full-duplex symbol.

As an example, the random access signal transmitted on the random access time-frequency resource is a random access signal of a same format.

As another example, the random access signal transmitted on the random access time-frequency resource includes random access signals of multiple formats, the random access signal of each format corresponds to at least one symbol in the random access time-frequency resource.

It can be understood that, based on the random access method provided by the embodiments of the present disclosure, the full-duplex symbol may enable the first node to perform bidirectional communication on the same time-frequency resource, thereby improving the response speed of the first node transmitting a random access signal (e.g., a PRACH signal) on the random access time-frequency resource and a utilization efficiency of communication system resources. Non-full-duplex symbols may ensure the stability of transmitting a random access signal on a random access time-frequency resource in a case where a first node is at a relatively far distance or in a complex environment. In summary, the random access resource includes multiple symbols, and the multiple symbols include a full-duplex symbol and a non-full-duplex symbols, which may enable a second node, upon detecting a random access signal (e.g., a PRACH signal) on the random access time-frequency resource, to aggregate the full-duplex symbol and the non-full-duplex symbol for transmission of the random access signal, thereby minimizing a problem that the continuous transmission of the PRACH signal is interrupted due to the introduction of a new blank GP in the full-duplex operation mode, improving the coverage capability of the PRACH signal, and thus ensuring the transmission of the random access signal in the full-duplex mode.

In some embodiments, the above method further includes that: a first signaling is sent, where the first signaling is used to indicate an index of each format in multiple formats and a symbol corresponding to each format in the multiple formats. Exemplarily, taking a case where the random access signal is a PRACH signal as an example, the format of the PRACH signal is generally indirectly configured, that is, the PRACH format is obtained indirectly by the second node specifying a PRACH configuration index in a PRACH time domain resource table. After receiving the first signaling, a first node determines the format of the PRACH signal from the PRACH time domain resource table based on the index corresponding to each of the multiple formats indicated by the first signaling, and determines the format of the PRACH signal on each symbol based on a time domain position of the symbol used by each of the multiple formats.

It can be understood that, by sending the first signaling, the second node may enable the first node to learn which formats of random access signals are supported by the second node and the time-domain positions of the symbols used by each format, so that the first node sends the random access signal at the correct time, thereby avoiding a conflict with the transmission of other signals, and improving the success rate of the random access procedure. In addition, based on the indication of the first signaling, the first node may send the random access signal at a specific time-domain position, which is helpful for resource allocation and resource usage of the random access time-frequency resource, thereby avoiding waste of resources.

In some embodiments, the above method further includes that: a second signaling is sent, where the second signaling is used to indicate a position and a length of a guard time.

In some embodiments, due to an occurrence of a blank GP, a continuous uplink transmission is interrupted. However, if the second node does not define and does not notify the first node of a position and length of the occurrence of the blank GP, the first node cannot determine which symbols in a truncated slot may be used to send the random access signal. In a case where the specific position and length of the GP are unknown, the truncated slot where the GP is located cannot be used to transmit the random access signal, and the truncated slot may be defined as an invalid RO. If symbols in the truncated slot need to be used for the transmission of the random access signal, it is very important for the second node to configure the occurrence of the position and length of the GP.

In some embodiments, the second node may further configure a length of the truncated slot, a position and a length of a DL symbol in the truncated slot, a position and a length of an uplink symbol, etc., to indirectly configure the position and length of the GP.

It can be understood that, by sending the second signaling, the second node may enable the first node, after receiving the second signaling, to determine which symbols in the truncated slot may be used to send the random access signal according to the position and length of the GP indicated by the second signaling, thereby enabling the first node to maximize a utilization of resources in the truncated slot and avoid resource waste. In addition, based on the position and length of the GP, the first node may select an optimal transmission timing when sending a random access signal, so as to improve the transmission efficiency of the random access signal and improve the success rate of the random access request of the first node.

The above mainly introduces the schemes of the embodiments of the present disclosure from the perspective of a method. It can be understood that, in order to implement the above functions, the random access apparatus includes at least one of corresponding hardware structures and software modules for executing each function. Those skilled in the art should easily realize that, combined with the units and algorithm steps of each example described in the embodiments disclosed herein, the embodiments of the present disclosure can be implemented by hardware or a combination of hardware and computer software. Whether a function is executed by hardware or by computer software driving hardware depends on a specific application and design constraint conditions of a technical scheme. Professional technicians may use different methods to implement the described functions for each specific application, but such implementation should not be considered as exceeding the scope of the embodiments of the present disclosure.

It can be understood that, in order to implement the above functions, the random access apparatus includes corresponding hardware structures and/or software modules for executing each function. Those skilled in the art should easily realize that, combined with the algorithm steps of each example described in the embodiments of the present disclosure, the present disclosure can be implemented by hardware or a combination of hardware and computer software. Whether a function is executed by hardware or by computer software driving hardware depends on a specific application and design constraint conditions of a technical scheme. Professional technicians may use different methods to implement the described functions for each specific application, but such implementation should not be considered as exceeding the scope of the present disclosure.

The embodiments of the present disclosure may divide functional modules of the random access apparatus according to the above method embodiments, for example, each functional module may be divided corresponding to each function, or two or more functions may be integrated into a functional module. The integrated module mentioned above may be implemented in a form of hardware or in a form of software. It should be noted that the division of modules in the embodiments of the present disclosure is illustrative and merely a logical function division, and there may be other division manners in actual implementation. The following takes dividing each functional module corresponding to each function as an example for description.

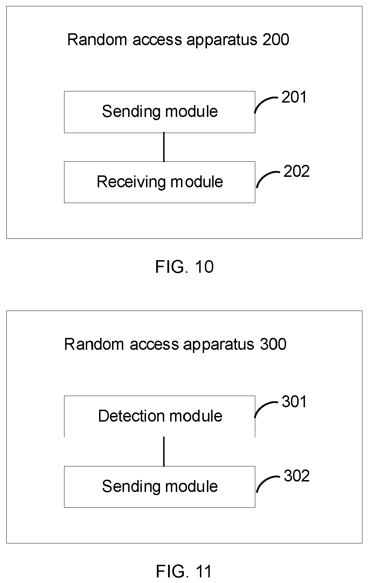

FIG. 10 is a structural schematic diagram of a random access apparatus provided by the embodiments of the present disclosure. The random access apparatus is applied to a first node, and may execute the random access method provided by the above method embodiments. As shown in FIG. 10, the random access apparatus 200 includes: a sending module 201 and a receiving module 202.

The sending module 201 is configured to send a random access signal on a random access time-frequency resource, where the random access time-frequency resource includes multiple symbols, and the multiple symbols include a full-duplex symbol and a non-full-duplex symbol.

In some embodiments, the sending module 201 is specifically configured to send a random access signal of a same format on the random access time-frequency resource.

In some embodiments, the sending module 201 is specifically configured to send random access signals of multiple formats on the random access time-frequency resource, where a random access signal of each format corresponds to at least one symbol in the random access time-frequency resource.

In some embodiments, the random access signals of multiple formats at least include a random access signal of a first format and a random access signal of a second format, the random access signal of the first format is applicable to symbols in a first type of slot, the random access signal of the second format is applicable to symbols in a second type of slot, and an available length of the first type of slot is less than an available length of the second type of slot.

In some embodiments, a difference in lengths of cyclic prefixes in the random access signals of multiple formats is within a preset range.

In some embodiments, the receiving module 202 is configured to receive a first signaling, where the first signaling is used to indicate an index corresponding to each format in multiple formats and time-domain positions of symbols used by each format in the multiple formats.

In some embodiments, the format is an existing format or a new format.

In some embodiments, the receiving module 202 is further configured to receive a second signaling, where the second signaling is used to indicate a position and a length of a guard time.

In some embodiments, a timing advance of a random access signal transmitted on a full-duplex symbol is different from a timing advance of a random access signal transmitted on a non-full-duplex symbol.

In some embodiments, a power configuration of a random access signal transmitted on a full-duplex symbol is different from a power configuration of a random access signal transmitted on a non-full-duplex symbol.

In some embodiments, the power configuration of the random access signal transmitted on the full-duplex symbol includes a power offset.

In some embodiments, the random access time-frequency resource includes a time-frequency resource corresponding to at least one random access occasion in a random access configuration table.

In some embodiments, all random access occasions in the random access configuration table are valid random access occasions.

FIG. 11 is a structural schematic diagram of another random access apparatus provided by the embodiments of the present disclosure. The random access apparatus is applied to a second node, and may execute the random access method provided by the above method embodiments. As shown in FIG. 11, the random access apparatus 300 includes: a detection module 301 and a sending module 302.

The detection module 301 is configured to detect a random access signal on a random access time-frequency resource, where the random access time-frequency resource includes multiple symbols, and the multiple symbols include a full-duplex symbol and a non-full-duplex symbol.

In some embodiments, a random access signal transmitted on the random access time-frequency resource is a random access signal of a same format.

In some embodiments, the random access signal transmitted on the random access time-frequency resource includes random access signals of multiple formats, and a random access signal of each format corresponds to at least one symbol in the random access time-frequency resource.

In some embodiments, random access signals of multiple formats at least include a random access signal of a first format and a random access signal of a second format, where the random access signal of the first format is applicable to symbols in a first type of slot, the random access signal of the second format is applicable to symbols in a second type of slot, and a length of the first type of slot is less than a length of the second type of slot.

In some embodiments, a difference in lengths of cyclic prefixes in the random access signals of multiple formats is within a preset range.

In some embodiments, the sending module 302 is configured to send a first signaling, where the first signaling is used to indicate an index of each format in the multiple formats, and a symbol corresponding to each format in the multiple formats.

In some embodiments, the format is an existing format or a new format.

In some embodiments, the sending module 302 is further configured to send a second signaling, where the second signaling is used to indicate a position and a length of a guard time.

In some embodiments, a timing advance of a random access signal transmitted on a full-duplex symbol is different from a timing advance of a random access signal transmitted on a non-full-duplex symbol.

In some embodiments, a power configuration of a random access signal transmitted on a full-duplex symbol is different from a power configuration of a random access signal transmitted on a non-full-duplex symbol.

In some embodiments, the power configuration of the random access signal transmitted on the full-duplex symbol includes a power offset.

In some embodiments, the random access time-frequency resource includes a time-frequency resource corresponding to at least one random access occasion in a random access configuration table.

In some embodiments, all random access occasions in the random access configuration table are valid random access occasions.

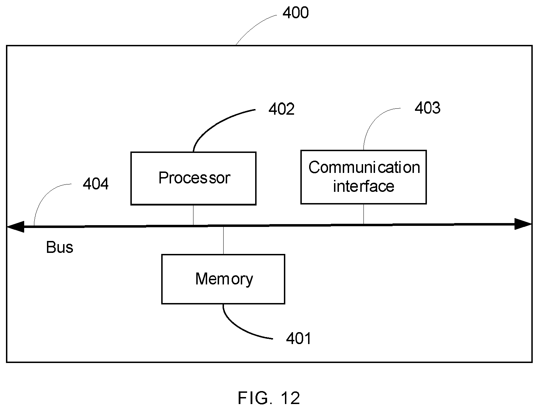

In a case of implementing the functions of the above-mentioned integrated modules in a form of hardware, the embodiments of the present disclosure provide a possible structure of the communication apparatus involved in the above-mentioned embodiments. As shown in FIG. 12, the communication apparatus 400 includes: a processor 402, and a bus 404. Optionally, the communication apparatus 400 may further include a memory 401; optionally, the communication apparatus 400 may further include a communication interface 403.

The processor 402 may be configured to implement or execute various exemplary logic blocks, modules, and circuits described in conjunction with the embodiments of the present disclosure. The processor 402 may be a central processing unit, a general purpose processor, a digital signal processor, an application specific integrated circuit, a field programmable gate array or other programmable logic device, a transistor logic device, a hardware component, or any combination thereof. The processor may implement or execute various exemplary logic blocks, modules, and circuits described in conjunction with the embodiments of the present disclosure. The processor 402 may also be a combination for implementing computing functions, for example, including a combination of one or more microprocessors, a combination of a digital signal processor (DSP) and a microprocessor, etc.

The communication interface 403 is configured to connect with other devices via a communication network. The communication network may be an Ethernet, a radio access network, a wireless local area network (WLAN), etc.

The memory 401 may be a read-only memory (ROM) or other types of static storage devices capable of storing static information and instructions, a random access memory (RAM) or other types of dynamic storage devices capable of storing information and instructions, or may be an electrically erasable programmable read-only memory (EEPROM), a magnetic disk storage medium or other magnetic storage devices, or any other medium capable of carrying or storing desired program code in a form of instructions or data structures and capable of being accessed by a computer, but is not limited thereto.

As a possible implementation, the memory 401 may exist independently of the processor 402, and the memory 401 may be connected to the processor 402 via the bus 404 for storing instructions or program code. When the processor 402 revokes and executes the instructions or program code stored in the memory 401, the random access method provided by the embodiments of the present disclosure can be implemented.

In another possible implementation, the memory 401 may also be integrated with the processor 402.

The bus 404 may be an extended industry standard architecture (EISA) bus, etc. The buses 404 may be classified into an address bus, a data bus, a control bus, etc. For ease of representation, only one thick line is used in FIG. 12, but it does not mean that there is only one bus or one type of bus.

Some embodiments of the present disclosure provide a computer-readable storage medium (e.g., a non-transitory computer-readable storage medium), where the computer-readable storage medium stores computer program instructions, and the computer program instructions, upon being run on a computer, enable the computer to execute the random access method according to any one of the above-described embodiments.

Exemplarily, the above-mentioned computer-readable storage medium may include, but is not limited to: a magnetic storage device (e.g., a hard disk, a floppy disk, or a magnetic tape, etc.), an optical disc (e.g., a Compact Disk (CD), a Digital Versatile Disk (DVD), etc.), a smart card, and a flash memory device (e.g., an Erasable Programmable Read-Only Memory (EPROM), a card, a stick, or a key drive, etc.). Various computer-readable storage media described in the present disclosure may represent one or more devices and/or other machine-readable storage media for storing information. The term "machine-readable storage medium" may include, but is not limited to, wireless channels and various other media capable of storing, containing, and/or carrying instructions and/or data.

The embodiments of the present disclosure provide a computer program product containing instructions, and the computer program product, upon being run on a computer, enable the computer to execute the random access method according to any one of the above-described embodiments.

The above description is merely a detailed description of the present disclosure, but the protection scope of the present disclosure is not limited thereto. Any change or replacement within the technical scope disclosed in the present disclosure shall be covered within the protection scope of the present disclosure. Therefore, the protection scope of the present disclosure should be subject to the protection scope of the claims.

## Claims

1. A random access method, wherein the method is applied to a first node, and the method comprises:
sending a random access signal on a random access time-frequency resource, wherein the random access time-frequency resource includes a plurality of symbols, and the plurality of symbols include a full-duplex symbol and a non-full-duplex symbol.

2. The method according to claim 1, wherein the sending the random access signal on the random access time-frequency resource, comprises:
sending, on the random access time-frequency resource, a random access signal of a same format.

3. The method according to claim 1, wherein the sending the random access signal on the random access time-frequency resource, comprises:
sending, on the random access time-frequency resource, random access signals of a plurality of formats, wherein a random access signal of each format corresponds to at least one symbol in the random access time-frequency resource.

4. The method according to claim 3, wherein the random access signals of the plurality of formats at least include a random access signal of a first format and a random access signal of a second format, the random access signal of the first format is applicable to a symbol in a first type of slot, the random access signal of the second format is applicable to a symbol in a second type of slot, and an available length of the first type of slot is less than an available length of the second type of slot.

5. The method according to claim 3, wherein a difference in lengths of cyclic prefixes of the random access signals of the plurality of formats is within a preset range.

6. The method according to claim 3, wherein the method further comprises:
receiving a first signaling, wherein the first signaling is used to indicate an index corresponding to each format of the plurality of formats, and a time-domain position of a symbol used by each format of the plurality of formats.

7. The method according to claim 2 or 3, wherein the format is an existing format or a new format.

8. The method according to claim 1, wherein the method further comprises:
receiving a second signaling, wherein the second signaling is used to indicate a position and a length of a guard time.

9. The method according to claim 1, wherein a timing advance of a random access signal transmitted on the full-duplex symbol is different from a timing advance of a random access signal transmitted on the non-full-duplex symbol.

10. The method according to claim 1, wherein a power configuration of a random access signal transmitted on the full-duplex symbol is different from a power configuration of a random access signal transmitted on the non-full-duplex symbol.

11. The method according to claim 10, wherein the power configuration of the random access signal transmitted on the full-duplex symbol includes a power offset.

12. The method according to claim 1, wherein the random access time-frequency resource includes a time-frequency resource corresponding to at least one random access occasion in a random access configuration table.

13. The method according to claim 12, wherein all random access occasions in the random access configuration table are valid random access occasions.

14. A random access method, wherein the method is applied to a second node, and the method comprises:
detecting a random access signal on a random access time-frequency resource, wherein the random access time-frequency resource includes a plurality of symbols, and the plurality of symbols include a full-duplex symbol and a non-full-duplex symbol.

15. The method according to claim 14, wherein the random access signal transmitted on the random access time-frequency resource is a random access signal of a same format.

16. The method according to claim 14, wherein the random access signal transmitted on the random access time-frequency resource includes random access signals of a plurality of formats, and the random access signal of each format corresponds to at least one symbol in the random access time-frequency resource.

17. The method according to claim 16, wherein the random access signals of the plurality of formats at least include a random access signal of a first format and a random access signal of a second format, the random access signal of the first format is applicable to a symbol in a first type of slot, the random access signal of the second format is applicable to a symbol in a second type of slot, and a length of the first type of slot is less than a length of the second type of slot.

18. The method according to claim 16, wherein a difference in lengths of cyclic prefixes of the random access signals of the plurality of formats is within a preset range.

19. The method according to claim 16, wherein the method further comprises:
sending a first signaling, wherein the first signaling is used to indicate an index of each format of the plurality of formats, and a symbol corresponding to each format of the plurality of formats.

20. The method according to claim 15 or 16, wherein the format is an existing format or a new format.

21. The method according to claim 14, wherein the method further comprises:
sending a second signaling, wherein the second signaling is used to indicate a position and a length of a guard time.

22. The method according to claim 14, wherein a timing advance of a random access signal transmitted on the full-duplex symbol is different from a timing advance of a random access signal transmitted on the non-full-duplex symbol.

23. The method according to claim 14, wherein a power configuration of a random access signal transmitted on the full-duplex symbol is different from a power configuration of a random access signal transmitted on the non-full-duplex symbol.

24. The method according to claim 23, wherein the power configuration of the random access signal transmitted on the full-duplex symbol includes a power offset.

25. The method according to claim 14, wherein the random access time-frequency resource includes a time-frequency resource corresponding to at least one random access occasion in a random access configuration table.

26. The method according to claim 25, wherein all random access occasions in the random access configuration table are valid random access occasions.

27. A communication apparatus, comprising: a processor and a memory for storing instructions executable for the processor;
wherein the processor is configured to execute the instructions, to enable the communication apparatus to perform the method according to any one of claims 1 to 26.

28. A computer-readable storage medium, wherein the computer-readable storage medium is stored with computer instructions, and the computer instructions, upon being run on a computer, enable the computer to perform the method according to any one of claims 1 to 26.
